# FASCICULE DE BREVET EUROPEEN

(11) **EP 3 210 813 B1**
(45) Date de publication et mention de la délivrance du brevet: **05.09.2018**
(21) Numéro de dépôt: 17157152.4
(22) Date de dépôt: 21.02.2017
(51) Int. Cl.: B60K 35/00

(54) **PROCEDE DE PRESENTATION D'INFORMATIONS AU DEMARRAGE D'UN VEHICULE AUTOMOBILE**
DARSTELLUNGSVERFAHREN VON INFORMATIONEN BEIM ANFAHREN EINES KRAFTFAHRZEUGS
METHOD OF PRESENTING INFORMATION ON STARTING A MOTOR VEHICLE

(30) Priorité: 24.02.2016 FR 1651533
(43) Date de publication de la demande: 30.08.2017
(73) Titulaire: Valeo Vision, 93012 Bobigny Cedex (FR)
(72) Inventeur: FLEURENCE, Thierry, 57685 Augny (FR); BOILEVIN, Antoine, 94300 Vincennes (FR); BOIROUX, Nicolas, 95270 Asnières sur Oise (FR)

(56) Documents cités:
- EP-A1- 1 798 588
- WO-A1-2015/145607
- DE-A1-102013 016 250
- DE-A1-102014 213 683
- FR-A1- 2 921 602
- US-A1- 2012 166 058
- US-A1- 2015 138 816

## Description

L'invention a trait au domaine de l'éclairage et/ou de la signalisation, notamment pour véhicules automobiles. Elle concerne plus particulièrement le domaine de l'éclairage intérieur et celui de la présentation d'informations aux occupants du véhicule, notamment des informations relatives à une conduite sans risque du véhicule.

Les véhicules de nos jours embarquent une multitude d'outils de diagnostic de l'état de fonctionnement d'organes vitaux du véhicule. Le conducteur peut ainsi voir des informations sur son tableau de bord lorsque la pression des pneus est insuffisante, que le niveau d'huile est trop bas, que les ceintures de sécurité ne sont pas verrouillées, etc... Ces informations consistent en des voyants d'avertissement qui signalent qu'une action est à envisager sur tel ou tel composant pour assurer la sécurité du conducteur et des passagers du véhicule. L'ensemble des informations est notamment regroupé sur le tableau de bord devant le conducteur, celui-ci devant s'assurer avant le démarrage de la présence ou de l'absence des voyants d'avertissement. Il en résulte que les passagers du véhicule ne peuvent être au courant d'une situation potentielle de risque à la bonne conduite du véhicule. Sur certains véhicules, un avertissement sonore est utilisé pour faire part de l'existence d'un tel voyant d'avertissement et de la nécessité pour le conducteur de regarder le tableau de bord. Un tel avertissement sonore est efficace mais n'est toutefois pas agréable pour les occupants du véhicule.

US 2015/138816 A1 divulgue un procédé de présentation d'informations dans lequel on réalise la vérification de différents paramètres associés au véhicule, et dans lequel on réalise une projection d'un faisceau lumineux déterminé sur une zone spécifique de l'habitacle du véhicule. Dans ce contexte, l'invention a pour objet un procédé de présentation d'informations au démarrage d'un véhicule automobile, dans lequel on réalise la vérification de différents paramètres associés au véhicule, et dans lequel on réalise une projection d'un faisceau lumineux déterminé sur une zone spécifique de l'habitacle du véhicule lorsqu'une pluralité des paramètres vérifiés est dans un état permettant d'autoriser le démarrage dudit véhicule.

Ainsi, on donne au conducteur une information de synthèse de différents états de fonctionnement ou de conditions de la scène de route dans laquelle doit s'intégrer le véhicule. Il est intéressant que ladite zone spécifique soit notamment distincte du tableau de bord, afin de donner une information aux occupants du véhicule qui ne soit pas noyée dans le flux d'informations disponibles sur le tableau de bord et qui soit visible par ailleurs par l'ensemble des occupants du véhicule, aussi bien les passagers à l'avant qu'à l'arrière.

Selon une caractéristique de l'invention, on réalise une projection d'un premier faisceau lumineux déterminé, sur une première zone spécifique de l'habitacle du véhicule, lorsqu'une pluralité des paramètres vérifiés formant un premier groupe fonctionnel est dans un état permettant d'autoriser le démarrage dudit véhicule, et on réalise un deuxième faisceau lumineux déterminé, sur une deuxième zone spécifique de l'habitacle du véhicule, lorsqu'une pluralité des paramètres vérifiés formant un deuxième groupe fonctionnel est dans un état permettant d'autoriser le démarrage dudit véhicule. L'éclairage de la première zone spécifique et de la deuxième zone spécifique peut être réalisé en séquences successives.

Ainsi, on associe une zone spécifique de projection à une information de synthèse d'un certain type de paramètres vérifiés sur le véhicule. L'ensemble des paramètres à vérifier est réparti en une pluralité de groupes fonctionnels que l'on considère comme des ensembles séparés, chaque ensemble donnant après étude une information synthétique favorable ou non au démarrage du véhicule. Il pourra être avantageux de choisir la zone spécifique sur laquelle on projette une information de synthèse d'un groupe de paramètres particuliers en fonction du type de paramètre correspondants : des informations relatives à la scène de route et notamment à l'absence de dangers dans l'angle mort pourront faire l'objet d'une projection sur le montant gauche de pare-brise, tandis que des informations sur l'état de fonctionnement des éléments de motorisation, de freinage, de direction, etc., pourront faire l'objet d'une projection sur la planche de bord, et que des informations sur le verrouillage correct des portes pourront faire l'objet d'une projection sur la poignée de porte du conducteur. Ces zones d'application à la projection d'informations ont été données à titre d'exemple et sauront être modifiées le cas échéant sans sortir du contexte de l'invention.

On pourra également prévoir que l'on réalise une projection d'un premier faisceau lumineux alternatif, distinct dudit faisceau lumineux déterminé, sur ladite zone de projection ou à proximité de celui-ci, lorsque l'un ou plusieurs des paramètres vérifiés ne permet pas d'autoriser le démarrage dudit véhicule. Et on pourra réaliser en outre une projection d'un deuxième faisceau lumineux alternatif, distinct dudit faisceau lumineux déterminé et dudit premier faisceau lumineux alternatif, sur ladite zone de projection ou à proximité de celui-ci, lorsque chacun des paramètres vérifiés permet d'autoriser le démarrage dudit véhicule, et qu'au moins un de ces paramètres nécessite une attention particulière du conducteur.

Un module de commande peut recevoir des informations en provenance d'une pluralité de moyens capteurs configurés pour vérifier l'un des différents paramètres associés au véhicule, ledit module de commande comparant chacune de ces informations à une base de données propre à chaque paramètre vérifié et en déduisant un type de faisceau lumineux à projeter.

Selon une série de caractéristiques, prises seules ou en combinaison, selon lesquelles les paramètres vérifiés sont à la fois des paramètres internes au véhicule et des paramètres externes au véhicule, on pourra prévoir que :
- les paramètres externes peuvent être vérifiés par des capteurs embarqués sur le véhicule et configurés pour détecter une situation de la scène de route dans laquelle s'intègre le véhicule ;
- l'un des paramètres externes peut notamment être la présence d'usager(s) de la route dans l'angle mort du véhicule ;
- les paramètres internes peuvent être vérifiés par des capteurs embarqués sur le véhicule et configurés pour détecter un état de fonctionnement du véhicule ;
- au moins certains des paramètres internes sont relatifs à des moyens de sécurité active ou passive du véhicule ;
- au moins certains des paramètres internes sont relatifs à des éléments de motorisation, de freinage, de direction, etc., du véhicule.

On pourra prévoir selon une première variante de réalisation du procédé selon l'invention de réaliser une projection d'un faisceau lumineux sur une zone spécifique de l'habitacle depuis une deuxième zone de cet habitacle, distincte de ladite zone spécifique. On peut notamment réaliser une projection d'un faisceau lumineux sur le montant de baie avant ou sur une partie du pare-brise, depuis le rétroviseur central intérieur ou depuis une zone proche du rétroviseur.

Selon une deuxième variante de réalisation du procédé selon l'invention, on peut réaliser une projection d'un faisceau lumineux sur une zone spécifique d'un élément structurel de l'habitacle, depuis l'intérieur dudit élément structurel.

Selon d'autres caractéristiques de l'invention, on pourra prévoir que :
- l'on réalise la vérification des différents paramètres lorsque la vitesse du véhicule est inférieure à une valeur seuil, de manière à pouvoir projeter un faisceau lumineux relatif à l'autorisation de démarrage du véhicule dès lors qu'une accélération est détectée ;
- l'on réalise une vérification en temps réel des différents paramètres.

D'autres caractéristiques et avantages de la présente invention apparaitront plus clairement à l'aide de la description et des dessins parmi lesquels :
- la figure 1 est une représentation schématique d'un habitacle de véhicule automobile, dans lequel on a illustré un dispositif de projection d'un faisceau lumineux pour la présentation d'informations selon l'invention, et trois zones de support de projection sur lesquelles le faisceau lumineux est susceptible d'être projeté après vérification de différents paramètres associés au véhicule ;
- les figures 2 et 3 sont des organigrammes représentant chacun un mode de réalisation du procédé de présentation d'informations selon l'invention.

Un véhicule automobile est équipé d'au moins un dispositif d'éclairage intérieur de son habitacle 2, particulier en ce qu'il comporte des moyens de projection 4 d'un faisceau lumineux 6 configuré pour présenter des informations 8 aux occupants du véhicule relatives au bon fonctionnement du véhicule avant son démarrage et son insertion dans la circulation.

Ces moyens participent à la réalisation d'un procédé de présentation d'informations selon lequel on permet de synthétiser des informations reçues de différents capteurs agencés dans ou autour du véhicule, afin de valider que des paramètres 10 du véhicule correspondants à ces informations sont aptes à permettre une conduite en toute sécurité. Un tel procédé permet de signifier aux occupants, et notamment le conducteur, le résultat de cette synthèse par un affichage lumineux, qui est avantageusement projeté dans une zone spécifique 12, visible d'une pluralité d'occupants du véhicule, et notamment distincte du tableau de bord 14 agencé en regard du conducteur.

Les paramètres vérifiés 10 peuvent être à la fois des paramètres internes au véhicule et des paramètres externes au véhicule. Dans ce dernier cas, on comprend que les paramètres externes peuvent être vérifiés par des capteurs embarqués sur le véhicule ou par des éléments externes aptes à communiquer avec le véhicule. Ces paramètres externes sont notamment relatifs à une situation de la scène de route dans laquelle s'intègre le véhicule, et par exemple la présence d'usager(s) de la route dans l'angle mort du véhicule.

Les paramètres internes sont vérifiés par des capteurs qui sont embarqués sur le véhicule et qui sont configurés pour détecter respectivement un état de fonctionnement du véhicule. Au moins certains des paramètres internes peuvent être relatifs à des moyens de sécurité active ou passive du véhicule, ou à des éléments de motorisation, de freinage, de direction, etc., du véhicule.

L'ensemble des informations 8 détectées, relatives à chaque paramètre à vérifier 10, est traité par un module de commande 16 qui compare, dans une ou plusieurs étapes de comparaison 18, chacune de ces informations 8 à une base de données propre à chaque paramètre vérifié et qui fait la synthèse de toutes ces comparaisons pour en déduire si un faisceau lumineux 6 doit être projeté pour informer les occupants du véhicule que le véhicule est apte à démarrer.

Selon une variante de réalisation, le module de commande 16 peut déterminer différents états de fonctionnement du véhicule par cette étape de comparaison 18 des paramètres vérifiés à des valeurs de référence, et le module de commande déduit donc de cette étape quel type de faisceau 6 est à projeter pour informer correctement les occupants.

En d'autres termes, on peut prévoir les cas complémentaires suivants :
- lorsque l'un ou plusieurs des paramètres vérifiés ne permet pas d'autoriser le démarrage dudit véhicule, il peut être commandé une projection d'un premier faisceau lumineux alternatif 20, distinct du faisceau lumineux 6 projeté lorsque tous les paramètres vérifiés sont bons, sur la même zone spécifique 12 de projection que celle de ce dernier, ou à proximité de cette même zone de projection : ce premier faisceau alternatif 20, par exemple rouge alors que le faisceau lumineux projeté lorsque tous les paramètres vérifiés sont bons est vert, indique au conducteur et à chacun des occupants que le véhicule ne devrait pas être démarré.
- lorsque chacun des paramètres vérifiés permet d'autoriser le démarrage dudit véhicule, et qu'au moins un de ces paramètres nécessite une attention particulière du conducteur, il peut être commandé une projection d'un deuxième faisceau lumineux alternatif 22, distinct dudit faisceau lumineux 6 projeté lorsque tous les paramètres vérifiés sont bons et distinct du premier faisceau lumineux alternatif projeté lorsqu'au moins un paramètre vérifié est impropre à la conduite.

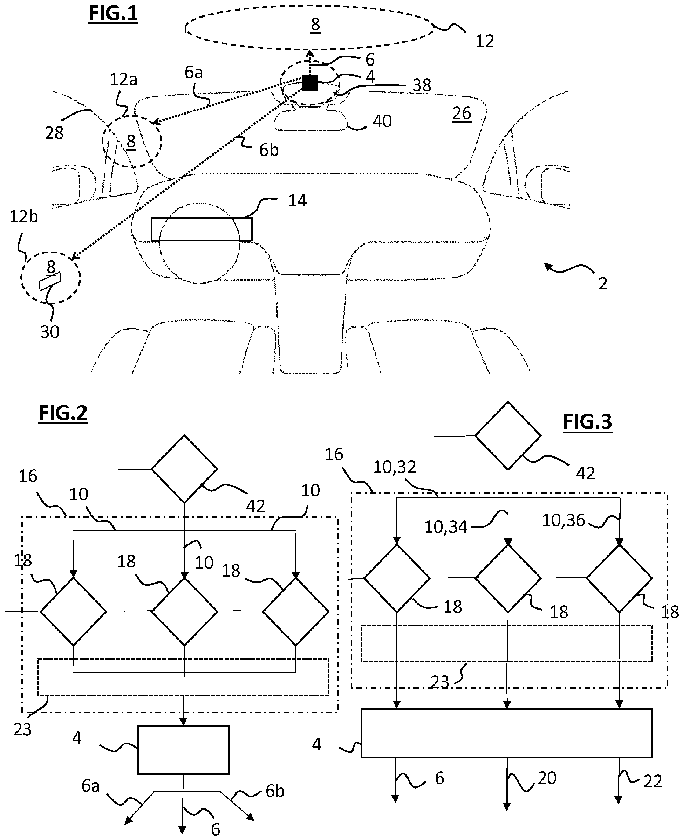

On a illustré sur la figure 2 cette possibilité de sorte que les moyens de projection 4 sont configurés pour émettre un faisceau lumineux déterminé 6, un premier faisceau lumineux alternatif 20 ou un deuxième faisceau alternatif 22 selon le résultat de la synthèse réalisée par un module de calcul 23 du module de commande.

Dans ce premier mode de réalisation, le faisceau lumineux 6 est projeté sur la même zone de l'habitacle à chaque démarrage du véhicule. L'ensemble des paramètres à vérifier 10 est traité par le module de commande sur la base de valeurs détectés par des moyens capteurs, et on réalise successivement une étape de comparaison 18 à des valeurs seuils pour chacun de ces paramètres, puis une synthèse de toutes les données de ces tests par le module de calcul 23 du module de commande 16, de sorte qu'il en résulte une donnée d'autorisation du démarrage du véhicule. On comprend, notamment lorsque l'information fournie par le faisceau projeté est une information prévenant d'un état du véhicule n'assurant pas une totale sécurité aux occupants, qu'il peut être intéressant que l'information projeté soit visible par tous dans l'habitacle, et cela justifie dès lors le choix d'une zone de projection spécifique 12 du faisceau visible de tous, par exemple sur le plafond 24, sur le pare-brise 26, sur un montant 28 de celui-ci ou sur chacune des poignées de porte 30.

Selon un deuxième mode de réalisation, illustré notamment sur la figure 1 et sur la figure 3, le faisceau lumineux peut être projeté sur différentes zones de l'habitacle, et le choix de telle ou telle zone support de projection peut notamment être fait en fonction des informations qui ont été vérifiées. Le module de commande 16 est programmé pour répartir au moins certains des paramètres à vérifier 10 en un premier groupe fonctionnel 32, par exemple concernant l'état de fonctionnement des éléments de motorisation, de freinage, de direction, etc., du véhicule, en un deuxième groupe fonctionnel 34, concernant par exemple le bon état des éléments de sécurité passive, comme le bouclage des ceintures ou la fermeture des portes, ou encore en un troisième groupe fonctionnel 36, concernant par exemple la situation de la scène de route autour du véhicule et la présence d'usagers pouvant ou non troubler le démarrage du véhicule. Ainsi, on sait réaliser une projection d'un premier faisceau lumineux déterminé 6a, sur une première zone spécifique 12a de l'habitacle du véhicule, lorsqu'une pluralité des paramètres vérifiés formant un premier groupe fonctionnel 32 est dans un état permettant d'autoriser le démarrage dudit véhicule, et on sait réaliser au moins un deuxième faisceau lumineux déterminé 6b, sur une deuxième zone spécifique 12b de l'habitacle du véhicule, lorsqu'une pluralité des paramètres vérifiés formant un deuxième groupe fonctionnel 34 est dans un état permettant d'autoriser le démarrage dudit véhicule.

Sur la figure 3, on a illustré la particularité de ce mode de réalisation du procédé, dans lequel la synthèse par le module de calcul de fait par groupe fonctionnel de paramètres, pour générer distinctement des autres groupes fonctionnels une projection d'un faisceau propre par les moyens de projection.

On peut prévoir, dans ce cas où plusieurs zones sont allumées distinctement pour témoigner de l'état de différents groupes fonctionnels de paramètres, que l'éclairage de la première zone spécifique et des autres zones spécifiques soit réalisé en séquences successives.

Les moyens de projection 4 consistent en un module d'éclairage comportant au moins une source de lumière et un système optique de projection. L'allumage de la source est commandé par instruction du module de commande, lorsqu'une information doit être présentée aux occupants du véhicule, et le système optique de projection, ou l'ensemble du module d'éclairage selon des variantes de réalisation choisies, est commandé en déplacement pour orienter le faisceau projeté sur telle ou telle zone support de projection. On réalise une projection d'un faisceau lumineux 6 sur une zone spécifique 12 de l'habitacle depuis une deuxième zone 38 de cet habitacle, distincte de ladite zone spécifique. Tel qu'illustré sur la figure 1, on pourra notamment prévoir que ce module d'éclairage pilotable est agencé dans la zone au-dessus du pare-brise 26, à l'aplomb de la planche de bord, par exemple en étant intégré dans le rétroviseur central intérieur 40, ou depuis une zone proche du rétroviseur, pour faciliter la projection de faisceau aussi-bien sur le montant de pare-brise 28 que sur au moins une poignée d'ouverture de porte 30, ou que sur le plafond 24. Il est notable que selon un mode de réalisation particulier de l'invention, on pourra prévoir que l'information projetée aux occupants du véhicule peut être une information rétroéclairée sur la zone support de projection.

Tel que cela a pu être précisé précédemment, la vérification des paramètres 10 a lieu au démarrage du véhicule. Ainsi, dans les deux modes de réalisation du procédé présenté précédemment, on pourra en outre prévoir que cette vérification est lieu à chaque redémarrage du véhicule, notamment en réalisant la vérification des différents paramètres uniquement si une étape de test 42 permet de valider que la vitesse du véhicule est inférieure à une valeur seuil. Avantageusement, on réalise une vérification en temps réel des différents paramètres afin que le procédé de présentation d'informations soit réactif à chaque démarrage ou redémarrage du véhicule.

La description qui précède explique clairement comment l'invention permet d'atteindre les objectifs qu'elle s'est fixés et notamment de proposer un procédé de présentation d'informations au démarrage d'un véhicule automobile, dans lequel on informe le conducteur et les occupants du véhicule de l'état du véhicule avant son démarrage, notamment en réalisant au préalable la vérification de différents paramètres associés au véhicule, et en projetant une information synthétique des différentes vérifications réalisées individuellement sur chacun des paramètres sur une zone spécifique de l'habitacle du véhicule

Bien entendu, diverses modifications peuvent être apportées par l'homme du métier au dispositif d'aide à la circulation qui vient d'être décrite à titre d'exemple non limitatif, dès lors que l'on met en oeuvre au moins un faisceau lumineux sur une zone déterminée de l'habitacle, notamment distincte du tableau de bord muni par ailleurs de voyants rétroéclairés, afin de faciliter la lecture de l'information aussi bien par le conducteur que par les autres occupants du véhicule.

En tout état de cause, l'invention ne saurait se limiter au mode de réalisation spécifiquement décrit dans ce document.

## Revendications

1. Procédé de présentation d'informations (8) au démarrage d'un véhicule automobile, dans lequel on réalise la vérification de différents paramètres (10) associés au véhicule, et dans lequel on réalise une projection d'un faisceau lumineux (6) déterminé sur une zone spécifique (12) de l'habitacle du véhicule lorsqu'une pluralité des paramètres vérifiés (10) est dans un état permettant d'autoriser le démarrage dudit véhicule.

2. Procédé selon la revendication 1, au cours duquel on réalise une projection d'un premier faisceau lumineux déterminé (6a), sur une première zone spécifique (12a) de l'habitacle du véhicule, lorsqu'une pluralité des paramètres vérifiés formant un premier groupe fonctionnel (32) est dans un état permettant d'autoriser le démarrage dudit véhicule, et au cours duquel on réalise un deuxième faisceau lumineux déterminé (6b), sur une deuxième zone spécifique (12b) de l'habitacle du véhicule, lorsqu'une pluralité des paramètres vérifiés formant un deuxième groupe fonctionnel (34) est dans un état permettant d'autoriser le démarrage dudit véhicule.

3. Procédé selon la revendication 2, **caractérisé en ce que** l'éclairage de la première zone spécifique (12a) et de la deuxième zone spécifique (12b) est réalisé en séquences successives.

4. Procédé selon l'une des revendications précédentes, **caractérisé en ce qu'**on réalise une projection d'un premier faisceau lumineux alternatif (20), distinct dudit faisceau lumineux déterminé (6), sur ladite zone spécifique (12) ou à proximité de celle-ci, lorsque l'un ou plusieurs des paramètres vérifiés (10) ne permet pas d'autoriser le démarrage dudit véhicule.

5. Procédé selon la revendication précédente, **caractérisé en ce qu'**on réalise une projection d'un deuxième faisceau lumineux alternatif (22), distinct dudit faisceau lumineux déterminé (6) et dudit premier faisceau lumineux alternatif (20), sur ladite zone spécifique ou à proximité de celle-ci, lorsque chacun des paramètres vérifiés (10) permet d'autoriser le démarrage dudit véhicule, et qu'au moins un de ces paramètres nécessite une attention particulière du conducteur.

6. Procédé selon l'une des revendications précédentes, au cours duquel un module de commande (16) reçoit des informations en provenance d'une pluralité de moyens capteurs configurés pour vérifier l'un des différents paramètres (10) associés au véhicule, ledit module de commande comparant chacune de ces informations à une base de données propre à chaque paramètre vérifié et en déduisant un type de faisceau lumineux à projeter.

7. Procédé selon l'une des revendications précédentes, **caractérisé en ce que** les paramètres vérifiés (10) sont à la fois des paramètres internes au véhicule et des paramètres externes au véhicule.

8. Procédé selon la revendication 7, **caractérisé en ce que** les paramètres externes sont vérifiés par des capteurs embarqués sur le véhicule et configurés pour détecter une situation de la scène de route dans laquelle s'intègre le véhicule.

9. Procédé selon l'une des revendications 7 ou 8, **caractérisé en ce qu'**un des paramètres externes est la présence d'usager(s) de la route dans l'angle mort du véhicule.

10. Procédé selon l'une des revendications 7 à 9, **caractérisé en ce que** les paramètres internes sont vérifiés par des capteurs embarqués sur le véhicule et configurés pour détecter respectivement un état de fonctionnement du véhicule.

11. Procédé selon la revendication précédente, **caractérisé en ce qu'**au moins certains des paramètres internes sont relatifs à des moyens de sécurité active ou passive du véhicule.

12. Procédé selon la revendication 7 à 10, **caractérisé en ce qu'**au moins certains des paramètres internes sont relatifs à des éléments de motorisation, de freinage, de direction, etc., du véhicule.

13. Procédé selon l'une des revendications précédentes, **caractérisé en ce qu'**on réalise une projection d'un faisceau lumineux (6) sur une zone spécifique (12) de l'habitacle depuis une deuxième zone (38) de cet habitacle, distincte de ladite zone spécifique.

14. Procédé selon la revendication précédente, **caractérisé en ce qu'**on réalise une projection d'un faisceau lumineux (6) sur un montant de baie avant (28) ou sur une partie du pare-brise (26), depuis le rétroviseur central intérieur (40) ou depuis une zone proche du rétroviseur.

15. Procédé selon l'une des revendications précédentes, **caractérisé en ce qu'**on réalise la vérification des différents paramètres (10) et la projection d'un faisceau lumineux (6) relatif à l'autorisation de démarrage du véhicule lorsque la vitesse du véhicule est inférieure à une valeur seuil.

## Patentansprüche

1. Verfahren zum Darstellen von Informationen (8) beim Starten eines Kraftfahrzeugs, wobei die Verifikation verschiedener Parameter (10), die dem Fahrzeug zugeordnet sind, erfolgt und wobei eine Projektion eines bestimmten Lichtstrahls (6) auf eine bestimmte Zone (12) des Fahrgastraums des Fahrzeugs erfolgt, wenn mehrere verifizierte Parameter (10) in einem Zustand sind, der das Zulassen des Startens des Fahrzeugs erlaubt.

2. Verfahren nach Anspruch 1, in dessen Verlauf eine Projektion eines ersten bestimmten Lichtstrahls (6a) auf eine erste bestimmte Zone (12a) des Fahrgastraums des Fahrzeugs erfolgt, wenn mehrere verifizierte Parameter, die eine erste funktionale Gruppe (32) bilden, in einem Zustand sind, der das Zulassen des Startens des Fahrzeugs erlaubt, und in dessen Verlauf eine Projektion eines zweiten bestimmten Lichtstrahls (6b) auf eine zweite bestimmte Zone (12b) des Fahrgastraums des Fahrzeugs erfolgt, wenn mehrere verifizierte Parameter, die eine zweite funktionale Gruppe (34) bilden, in einem Zustand sind, der das Zulassen des Startens des Fahrzeugs erlaubt.

3. Verfahren nach Anspruch 2, **dadurch gekennzeichnet, dass** die Beleuchtung der ersten bestimmten Zone (12a) und die Beleuchtung der zweiten bestimmten Zone (12b) nacheinander erfolgen.

4. Verfahren nach einem der vorhergehenden Ansprüche, **dadurch gekennzeichnet, dass** eine Projektion eines ersten alternativen Lichtstrahls (20), der von dem bestimmten Lichtstrahl (6) verschieden ist, auf die bestimmte Zone (12) oder in deren Umgebung erfolgt, wenn ein oder mehrere verifizierte Parameter (10) das Zulassen des Startens des Fahrzeugs nicht erlauben.

5. Verfahren nach den vorhergehenden Anspruch, **dadurch gekennzeichnet, dass** eine Projektion eines zweiten alternativen Lichtstrahls (22), der von dem bestimmten Lichtstrahl (6) und von dem ersten alternativen Lichtstrahl (20) verschieden ist, auf die bestimmte Zone oder in deren Umgebung erfolgt, wenn jeder der verifizierten Parameter (10) das Zulassen des Startens des Fahrzeugs erlaubt und wenn wenigstens einer dieser Parameter eine besondere Aufmerksamkeit des Fahrers erfordert.

6. Verfahren nach einem der vorhergehenden Ansprüche, in dessen Verlauf ein Steuermodul (16) Informationen von mehreren Sensormitteln empfängt, die konfiguriert sind, einen der verschiedenen Parameter (10), die dem Fahrzeug zugeordnet sind, zu verifizieren, wobei das Steuermodul alle diese Informationen mit einer Datenbank vergleicht, die zu jedem verifizierten Parameter gehört, und daraus einen Typ des zu projizierenden Lichtstrahls ableitet.

7. Verfahren nach einem der vorhergehenden Ansprüche, **dadurch gekennzeichnet, dass** die verifizierten Parameter (10) sowohl fahrzeuginterne Parameter als auch fahrzeugexterne Parameter sind.

8. Verfahren der Haftung 7, **dadurch gekennzeichnet, dass** die externen Parameter durch bordinterne Sensoren des Fahrzeugs, die konfiguriert sind, eine Situation der Straßenszene, in der sich das Fahrzeug befindet, zu detektieren, verifiziert werden.

9. Verfahren nach einem der Ansprüche 7 oder 8, **dadurch gekennzeichnet, dass** einer der externen Parameter das Vorhandensein eines oder mehrerer Nutzer der Straße im toten Winkel des Fahrzeugs ist.

10. Verfahren nach einem der Ansprüche 7 bis 9, **dadurch gekennzeichnet, dass** die internen Parameter durch bordinterne Sensoren verifiziert sind, die konfiguriert sind, einen jeweiligen Betriebszustand des Fahrzeugs zu detektieren.

11. Verfahren nach dem vorhergehenden Anspruch, **dadurch gekennzeichnet, dass** wenigstens bestimmte interne Parameter auf Mittel der aktiven oder passiven Sicherheit des Fahrzeugs bezogen sind.

12. Verfahren nach Anspruch 7 bis 10, **dadurch gekennzeichnet, dass** wenigstens bestimmte interne Parameter auf Antriebs-, Brems- und Lenkmittel und dergleichen des Fahrzeugs bezogen sind.

13. Verfahren nach einem der vorhergehenden Ansprüche, **dadurch gekennzeichnet, dass** eine Projektion eines Lichtstrahls (6) auf eine bestimmte Zone (12) des Fahrgastraums aus einer zweiten Zone (38) dieses Fahrgastraums, die von der bestimmten Zone verschieden ist, erfolgt.

14. Verfahren nach dem vorhergehenden Anspruch, **dadurch gekennzeichnet, dass** eine Projektion eines Lichtstrahls (6) von dem zentralen Innenspiegel (40) oder von einer Zone in der Nähe des Innenspiegels auf eine A-Säule (28) oder auf einen Teil der Windschutzscheibe (26) erfolgt.

15. Verfahren nach einem der vorhergehenden Ansprüche, **dadurch gekennzeichnet, dass** die Verifikation der verschiedenen Parameter (10) und die Projektion eines Lichtstrahls (6), der auf das Zulassen des Startens des Fahrzeugs bezogen ist, erfolgt, wenn die Geschwindigkeit des Fahrzeugs niedriger als ein Schwellenwert ist.

## Claims

1. Method for presenting information (8) upon starting an automotive vehicle, in which various parameters associated with the vehicle are verified, and in which a particular light beam (6) is projected onto a specific area (12) of the passenger compartment of the vehicle when the state of a plurality of the verified parameters (10) allows said vehicle to be started.

2. Method according to Claim 1, in which a first particular light beam (6a) is projected onto a first specific area (12a) of the passenger compartment of the vehicle when the state of a plurality of the verified parameters forming a first functional group (32) allows said vehicle to be started, and in which a second particular light beam (6b) is projected onto a second specific area (12b) of the passenger compartment of the vehicle when the state of a plurality of the verified parameters forming a second functional group (34) allows said vehicle to be started.

3. Method according to Claim 2, **characterized in that** the first specific area (12a) and the second specific area (12b) are lit up in successive sequences.

4. Method according to one of the preceding claims, **characterized in that** a first alternative light beam (20), separate from said particular light beam (6), is projected onto said specific area (12), or in proximity thereto, when one or more of the verified parameters (10) does not allow said vehicle to be started.

5. Method according to the preceding claim, **characterized in that** a second alternative light beam (22), separate from said particular light beam (6) and from said first alternative light beam (20), is projected onto said specific area, or in proximity thereto, when each of the verified parameters (10) allows said vehicle to be started, and at least one of these parameters requires particular attention on the part of the driver.

6. Method according to one of the preceding claims, in which a control module (16) receives information arising from a plurality of sensor means configured to verify one of the various parameters (10) associated with the vehicle, said control module comparing each item of this information with a database specific to each verified parameter and deducing therefrom a type of light beam to be projected.

7. Method according to one of the preceding claims, **characterized in that** the verified parameters (10) are both parameters internal to the vehicle and parameters external to the vehicle.

8. Method according to Claim 7, **characterized in that** the external parameters are verified by sensors on board the vehicle and configured to detect a situation of the road scene in which the vehicle is engaged.

9. Method according to either of Claims 7 and 8, **characterized in that** one of the external parameters is the presence of one or more road users in the blind spot of the vehicle.

10. Method according to one of Claims 7 to 9, **characterized in that** the internal parameters are verified by sensors on board the vehicle and configured to detect a respective operating state of the vehicle.

11. Method according to the preceding claim, **characterized in that** at least some of the internal parameters relate to active or passive safety means of the vehicle.

12. Method according to one of Claims 7 to 10, **characterized in that** at least some of the internal parameters relate to drive, braking, steering, etc. elements of the vehicle.

13. Method according to one of the preceding claim, **characterized in that** a light beam (6) is projected onto a specific area (12) of the passenger compartment from a second area (38) of this passenger compartment, separate from said specific area.

14. Method according to the preceding claim, **characterized in that** a light beam (6) is projected onto a front window pillar (28), or onto a portion of the windscreen (26), from the interior central rear-view mirror (40) or from an area close to the rear-view mirror.

15. Method according to one of the preceding claims, **characterized in that** the various parameters (10) are verified and a light beam (6) relating to permission to start the vehicle is projected when the speed of the vehicle is below a threshold value.
